# EUROPEAN PATENT SPECIFICATION

(11) **EP 1 784 030 B1**
(45) Date of publication and mention of the grant of the patent: **23.04.2008**
(21) Application number: 05292322.4
(22) Date of filing: 02.11.2005
(51) Int. Cl.: H04Q 7/36

(54) **Method of using the frequency spectrum of a TDD radio system**
Verfahren zur Verwendung des Frequenzspektrums eines TDD-Mobilfunksystems
Procédé pour utilisation du spectre de fréquence d'un système radio DRT

(43) Date of publication of application: 09.05.2007
(73) Proprietor: Alcatel Lucent, 75008 Paris (FR)
(72) Inventor: Lange, Keld, 75443 Ötisheim (DE)
(74) Representative: Schmidt, Werner Karl

(56) References cited:
- EP-A- 1 006 745
- EP-A- 1 349 414
- US-A1- 2004 092 232
- QINGYU MIAO ET AL: "An analysis of the interference in the TDD-CDMA system" PROCEEDINGS OF IEEE TENCON 2000. IEEE REGION 10 CONFERENCE. KUALA LUMPUR, SEPT. 24 - 27, 2000, IEEE REGION 10 ANNUAL CONFERENCE, NEW YORK, NY : IEEE, US, vol. VOL. 1 OF 3, August 2000 (2000-08), pages I-333, XP002955267 ISBN: 0-7803-6356-6

## Description

### Field of the invention

The invention relates to a base station for and a method of using the frequency spectrum of a time division duplex (TDD) radio system. The invention can be used in all wireless communication systems using TDD, such as Wifi systems, Wimax systems, UMTS-TDD systems or DECT systems.

### Background and prior art

Wireless telecommunication systems, e.g. those offering telephone services, often use TDD. When using this technology for telephone services TDD faces a problem when two devices, e.g. two mobile phones, transmit and receive simultaneously and are connected to different TDD systems, e.g. TDD systems operated by different telecommunication companies. If the two TDD systems are not synchronized with each other the two devices encounter significant interferences if they use adjacent frequencies.

Each TDD system services its users within a certain frequency range. This frequency range is granted by a regulator and might be licensed or unlicensed. To comply with the regulation the operator and the terminals use a multitude of channel filters to make sure that they only transmit signals within the given frequency spectrum. Despite the channel filters the transmitters within a TDD system, in particular the transmitters of the terminals, transmit their signals with an out-of-band power. This out-of-band power is responsible for the above-mentioned interferences.

If the two TDD systems were synchronized the time slots used for the first device would be different from the time slots used for servicing the second device. A synchronization would thus avoid the above-mentioned interferences. However, apart from Korea wireless telecommunication systems using TDD are not synchronized.

According to EP 1 006 745 A1, in a cellular radio communication system in which mobile stations belonging to different businesses use channels which have adjacent frequencies, adjacent-channel interference of a large interference level is produced. Therefore, of the frequency bands allotted to each business, the adjacent frequency bands, which are adjacent to frequency bands allotted to other businesses, are allotted to low power communications, while non-adjacent frequency bands are allotted to high power communications.

EP 1 349 414 A1 discloses a radio control apparatus that communicates with a mobile station using a first and a second frequency band area. Receiving a request for data transmission to the mobile station, the apparatus determines whether radio wave transmission and reception are being performed with the mobile station using the first frequency band area. The apparatus then determines a transmission time for data transmission using the second frequency band area, based on a communication pattern of the mobile station.

### Summary of the invention

It is an object of the invention to avoid interferences between two devices being serviced by different TDD systems for the case that the two TDD systems are not synchronized.

Another object of the invention is to use the frequency spectrum of a TDD system more efficiently.

Preferably, the above-mentioned objects are achieved simultaneously.

These objects and other objects are solved by the features of the independent claims. Preferred embodiments of the invention are described by the features of the dependent claims. It should be emphasized that any reference signs in the claims shall not be construed as limiting the scope of the invention.

According to a first aspect a method for using the frequency spectrum of a TDD system is suggested. In a first step an upper guardband at the upper edge of the frequency spectrum, and a lower guardband at the lower edge of the frequency spectrum is defined. In a second step the frequency spectrum is used in such a way that radio links are enabled between the two guardbands, but that emitted signals having frequencies within these guardbands are filtered out. As a consequence, the signal strength of signals having frequencies between the guardbands is higher than for frequencies within the upper or lower guardband. Therefore, users of the TDD system will only be serviced with frequencies between these guardbands, and emissions within the guardbands are kept to a minimum. At least one of the guardbands is used for a point-to-point radio link between a base station and a core network (backhauling). Self-backhauling over the air reduces hardware requirements and cost, as the last mile between an existing telecommunication network and the base stations is a significant cost factor for broadband radio systems such as WiMAX.

Attenuating the unwanted signals in the guardbands is done with filters. In the simplest case the attenuation is achieved inherently by the channel filter. As an example, in a WiMAX system covering the frequency range 3.4 GHz - 3.6 GHz each channel filter may have a bandwidth of 5 MHz. With the channel filters the TDD system provides the above-mentioned guardbands and would only be responsible for a certain out-of-band power in these guardbands, but not for out-of-band power outside the frequency range granted by the regulator.

Using the guardbands reduces interferences of the above-mentioned type because users will be serviced at frequencies which are too different to experience a significant interference.

In preferred embodiments actions for reducing interferences between a first device serviced by a first TDD system and a second device serviced by a second TDD system are taken, whereby the reduced amount of interference enables the operator to reuse the guardbands for preselected, point-to-point radio links between base stations and the core network (backhauling).

This approach takes into account that future filters, in particular filters used in terminals, will probably have a higher quality. Filters of higher quality will then reduce the out-of-band power more than today. As a consequence the guardbands can then be made smaller or will become superfluous altogether. Even then the interoperability between TDD systems will still be guaranteed.

The measures which can be taken to reduce the interferences within the guardbands may be
- Reducing the output power of transmitters, and thus reducing the out-of-band power
- Transmitting signals with smaller radiation lobes

As a matter of fact these measures, applied for frequencies within the guardbands, can be taken individually or in combination. All serve to reduce interferences which enable the operator to reuse the guardbands.

These and other aspects of the invention will be apparent from and elucidated with reference to the embodiments thereafter. It should be noted that the use of reference signs shall not be construed as limiting the scope of the invention.

### Brief description of the drawings

- Fig. 1: shows a flowchart illustrating the way in which the method is carried out,
- Fig. 2: shows a wireless telecommunication system using the invention.

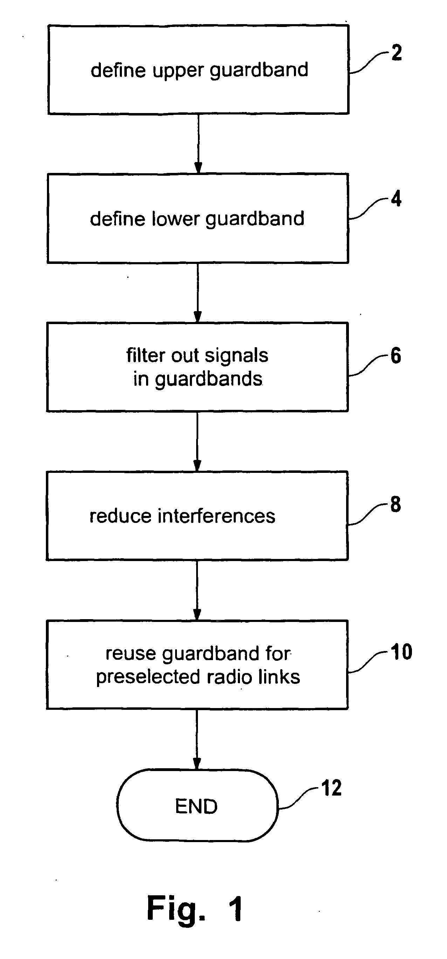

Fig. 1 shows a flowchart illustrating the way in which the method is carried out. In step 2 the upper guardband is defined, and in step 4 the lower guardband.

In operation, signals within the guardbands are filtered out in step 6. This is done by channel filters in the devices of the TDD system, e.g. in base stations or in terminals. As a result, devices of a TDD system using the method according to the invention will face a smaller amount of interference in comparison to users of other TDD systems.

In step 8 action is taken to reduce interferences, e.g. by using a reduced output power, smaller radiation lobes, or receiving signals with increased sensitivity for signals having frequencies within the guardbands. These measures reduce the out-of-band power within the guardbands.

As a consequence, the TDD operator can reuse the guardbands in step 10 for preselected radio links. The guardbands are used for self-backhauling of the TDD system reducing hardware requirements of the last mile which is otherwise based on cable connections. The method then stops with step 12.

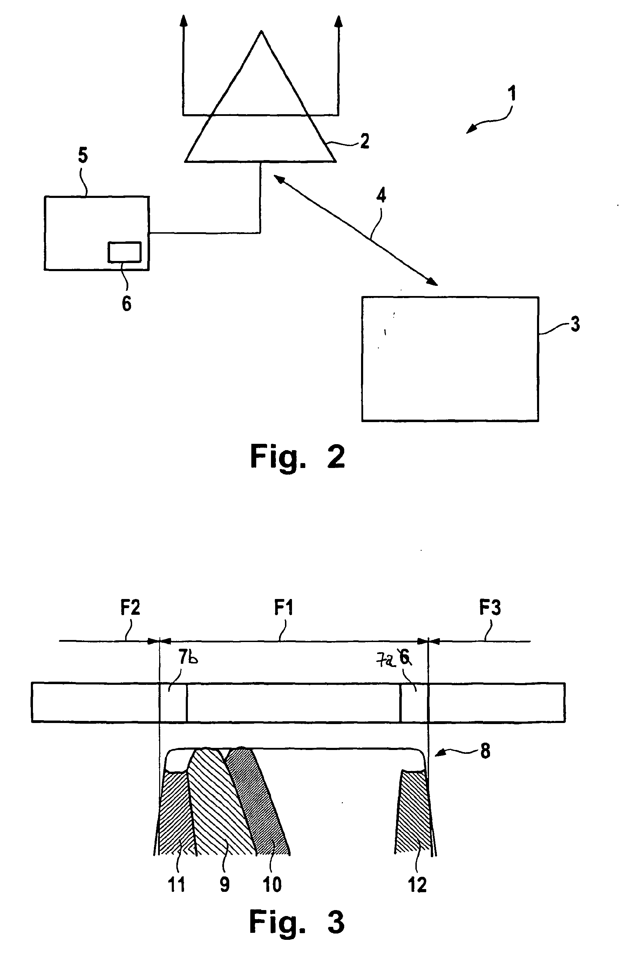

Fig. 2 shows a TDD radio system 1 with a base station 2 connected to a core network 3 by a radio link 4. Associated with the base station 2 is a logic 5 responsible for the transmission and reception of signals over the air interface. The logic 5 comprises a channel filter 6 to provide an upper guardband and a corresponding channel filter (not shown) to provide a lower guardband.

Fig. 3 shows the frequency ranges associated with the operation of the base station 2. The operator of the base station 2 is using a frequency spectrum F1, whereas competitors use frequency spectra F2 and F3. The frequency spectra might be granted to them by a regulator. The spectrum F1 has an upper guardband 7a and lower guardband 7b. The multitude of channel filters provide a spectrum mask 8. Output spectra 9, 10 of a carrier frequency are located between the guardbands 7a, 7b. The output spectra 11, 12 of the backhauling links are located in the lower nd upper guardband respectively.

### List of reference numerals

- 1: TDD system
- 2: Base station
- 3: Core network
- 4: Radio link
- 5: Logic
- 6: Filter
- 7a: Upper guardband
- 7b: Lower guardband
- 8: Spectrum mask
- 9: Output spectrum of a carrier frequency
- 10: Output spectrum of a carrier frequency
- 11: Output spectrum of backhauling link
- 12: Output spectrum of backhauling link
- F1: frequency spectrum
- F2: frequency spectrum
- F3: frequency spectrum

## Claims

1. Method with which a time division duplex TDD radio system (1) uses a frequency spectrum (F1), wherein
- an upper guardband (7a) at the upper edge of the frequency spectrum, and
- a lower guardband (7b) at the lower edge of the frequency spectrum
are defined, whereby signals having frequencies within these guardbands are transmitted with a signal strength which is smaller than the signal strength of signals having frequencies between the guardbands, **characterized in that** at least one of the guardbands is reused for a point-to-point radio link (4) between a base station (2) and a core network (3).

2. Method according to claim 1, **characterized in that** signals having frequencies within the upper guardband or within the lower guardband are transmitted with a reduced output power in comparison to signals having frequencies between the guardbands.

3. Method according to claim 1, **characterized in that** signals having frequencies within the upper guardband or within the lower guardband are transmitted or received using antennas with smaller radiation lobes in comparison to signals having frequencies between the guardbands.

4. Method according to claim 1, **characterized in that** signals having frequencies within the upper guardband or within the lower guardband are received with a higher sensitivity in comparison to signals having frequencies between the guardbands.

5. Base station of a time division duplex TDD radio system, the base station (2) comprising
- channel filters (6) for defining an upper guardband (7a) and a lower guardband 7(b) at the edges of a frequency spectrum (F1) covered by said base station,
- transmission logic (5) for transmitting signals having frequencies within these guardbands with a signal strength smaller than the signal strength of signals having frequencies between the guardbands,
**characterized in that** the transmission logic is adapted to reuse at least one of the guardbands for a point-to-point radio link (4) between the base station and a core network (3).

6. Base station according to claim 5, **characterized in that** it is adapted to provide WiMAX services.

7. Time division duplex TDD radio system, comprising a base station according to any of the claims 5 or 6.

## Patentansprüche

1. Verfahren, mit welchem ein Zeitduplex-TDD-Funksystem (1) ein Frequenzspektrum (F1) verwendet, wobei
- ein oberes Schutzband (7a) am oberen Rand des Frequenzspektrums und
- ein oberes Schutzband (7b) am unteren Rand des Frequenzspektrums
definiert werden, wodurch Signale, die Frequenzen innerhalb dieser Schutzbänder aufeisen, mit Signalstärken übertragen werden, die kleiner sind als die Signalstärken der Signale, die Frequenzen zwischen den Schutzbändern aufweisen, **dadurch gekennzeichnet, dass** mindestens eines der Schutzbänder für eine Punkt-zu-Punkt-Funkverbindung (4) zwischen einer Basisstation (2) und einem Kernnetz (3) genutzt wird.

2. Verfahren nach Anspruch 1, **dadurch gekennzeichnet, dass** Signale, die Frequenzen innerhalb des oberen Schutzbandes oder innerhalb des unteren Schutzbandes aufweisen, im Vergleich zu Signalen, die Frequenzen zwischen den Schutzbändern aufweisen, mit einer reduzierten Ausgangsleistung gesendet werden.

3. Verfahren nach Anspruch 1, **dadurch gekennzeichnet, dass** Signale, die Frequenzen innerhalb des oberen Schutzbandes oder innerhalb des unteren Schutzbandes aufweisen, im Vergleich zu Signalen, die Frequenzen zwischen den Schutzbändern aufweisen, unter Verwendung von Antennen mit kleineren Strahlungskeulen gesendet oder empfangen werden.

4. Verfahren nach Anspruch 1, **dadurch gekennzeichnet, dass** Signale, die Frequenzen innerhalb des oberen Schutzbandes oder innerhalb des unteren Schutzbandes aufweisen, im Vergleich zu Signalen, die Frequenzen zwischen den Schutzbändern aufweisen, mit einer höheren Empfindlichkeit empfangen werden.

5. Basisstation eines Zeitduplex-TDD-Funksystems, wobei die Basisstation umfasst:
- Kanalfilter (6) zum Definieren eines obern Schutzbandes (7a) und eines unteren Schutzbandes (7b) an den Rändern eines Frequenzspektrums (F1), welches von der Basisstation abgedeckt wird;
- Sendelogik (5), um Signale, die Frequenzen innerhalb dieser Schutzbänder aufweisen, mit einer kleineren Signalstärke zu senden als die Signalstärke der Signale, die Frequenzen zwischen den Schutzbändern aufweisen;
**dadurch gekennzeichnet, dass** die Sendelogik dafür geeignet ist, mindestens eines der Schutzbänder für eine Punkt-zu-Punkt-Funkverbindung (4) zwischen einer Basisstation (2) und einem Kernnetz (3) zu nutzen.

6. Basisstation nach Anspruch 5, **dadurch gekennzeichnet, dass** sie dafür geeignet ist, WiMAX-Dienste bereitzustellen.

7. Zeitduplex-TDD-System, umfassend eine Basisstation nach einem der Ansprüche 5 oder 6.

## Revendications

1. Procédé dans lequel un système de radiocommunication à duplexage par répartition dans le temps TDD (1) utilise un spectre de fréquences (F1), dans lequel
- une bande de garde supérieure (7a) à la périphérie supérieure du spectre de fréquences, et
- une bande de garde inférieure (7a) à la périphérie inférieure du spectre de fréquences,
sont définies, grâce à quoi les signaux ayant des fréquences dans ces bandes de garde sont transmis selon une intensité du signal qui est inférieure à l'intensité des signaux ayant des fréquences entre les bandes de garde, **caractérisé en ce que** au moins une des bandes de garde est réutilisée pour une liaison radio point à point (4) entre une station de base (2) et un réseau fédérateur (3).

2. Procédé selon la revendication 1, **caractérisé en ce que** les signaux ayant des fréquences dans la bande de garde supérieure ou dans la bande de garde inférieure sont transmis selon une puissance de sortie réduite par rapport aux signaux ayant des fréquences entre les bandes de garde.

3. Procédé selon la revendication 1, **caractérisé en ce que** les signaux ayant des fréquences dans la bande de garde supérieure ou dans la bande de garde inférieure sont transmis ou reçus en utilisant des antennes ayant des lobes de rayonnement plus petits par rapport aux signaux ayant des fréquences entre les bandes de garde.

4. Procédé selon la revendication 1, **caractérisé en ce que** les signaux ayant des fréquences dans la bande de garde supérieure ou dans la bande de garde inférieure sont reçus avec une plus grande sensibilité par rapport aux signaux ayant des fréquences entre les bandes de garde.

5. Station de base d'un système de radiocommunication à duplexage par répartition dans le temps TDD, la station de base (2) comprenant
- des filtres de voie (6) qui définissent une bande de garde supérieure (7a) et une bande de garde inférieure (7b) aux périphéries d'un spectre de fréquences (F1) couvert par ladite station de base,
- une logique de transmission (5) qui transmet les signaux ayant des fréquences dans ces bandes de garde selon une intensité du signal inférieure à l'intensité des signaux ayant des fréquences entre les bandes de garde,
**caractérisée en ce que** la logique de transmission est adaptée pour réutiliser au moins l'une des bande de garde pour une liaison radio point à point (4) entre une station de base (2) et un réseau fédérateur (3).

6. Station de base selon la revendication 5, **caractérisée en ce qu'**elle est adaptée pour fournir des services WiMAX.

7. Système de radiocommunication à duplexage par répartition dans le temps TDD, comprenant une station de base selon l'une quelconque des revendications 5 ou 6.
